# EUROPÄISCHE PATENTANMELDUNG

(11) **EP 0 534 421 A2**
(43) Veröffentlichungstag der Anmeldung: **31.03.1993**
(21) Anmeldenummer: 92116314.3
(22) Anmeldetag: 24.09.1992
(51) Int. Cl.: B60P 3/03

(54) **Gepanzertes Kraftfahrzeug für den Transport von Geld oder Wertsachen**

(30) Priorität: 25.09.1991 DE 4131918
(71) Anmelder: MIP-INSTANDSETZUNGSBETRIEB GmbH, D-55120 Mainz (DE)
(72) Erfinder: Schmidt, Juergen, D-W 6500 Mainz (DE); Lemb, Wilhelm, D-W 6501 Budenheim (DE); Ley, Norbert, D-W 6501 Heidesheim (DE)
(74) Vertreter: Kodron, Rudolf S., Dipl.-Ing.

(57) **Zusammenfassung**

Es wird angestrebt, den Bau eines gepanzerten Kraftfahrzeugs für den Transport von Geld oder anderen Wertsachen in der Weise umzugestalten, daß das Nutzgewicht des Werttransporters etwa um ein Drittel vergrößert und außerdem die Nutzdauer durch verkürzte Reparaturzeiten und verbesserte Korrosionsfestigkeit verlängert wird.

Erreicht wird dies durch eine in Leichtbauweise aus Aluminiumrohrrahmen mit äußerer Aluminiumblechverkleidung hergestellte Frachtgutkabine, die leicht lösbar - beispielsweise mittels Schellen und Schrauben - mit dem Fahrgestell eines üblichen Lastkraftwagens verbunden ist und durch ein in Leichtbauweize aus Aluminiumrohrrahmen mit äußerer Aluminiumblechverkleidung hergestelltes Fahrerhausoberteil, das leicht lösbar mit der mit Stahlblechplatten gepanzerten Fahrerkabine-Bodenwand verbunden ist.

## Beschreibung

Die Erfindung betrifft ein gepanzertes Kraftfahrzeug für den Transport von Geld oder anderen Wertsachen.

Die bekannten Werttransporter der genannten Art sind wegen ihrer Panzerung schwere Sonderfahrzeuge mit stark verringertem Nutzgewicht, die in geringer Stückzahl mit erhöhten Gestehungskosten hergestellt werden.

Der Erfindung liegt die Aufgabe zugrunde, den Bau derartiger Werttransporter in der Weise umzugestalten, daß das Nutzgewicht etwa um ein Drittel vergrößert und außerdem die Nutzdauer durch verkürzte Reparaturzeiten und verbesserte Korrosionsfestigkeit verlängert wird.

Gelöst wird diese Aufgabe nach der Erfindung bei einem Werttransporter der eingangs erwähnten Art durch eine in Leichtbauweise aus Aluminiumrohrrahmen mit äußerer Aluminiumblechverkleidung hergestellte Frachtgutkabine, die leicht lösbar -beispielsweise mittels Schellen und Schrauben- mit dem Fahrgestell eines üblichen Lastkraftwagens verbunden ist und durch ein in Leichtbauweise aus Aluminiumrohrrahmen mit äußerer Aluminiumblechverkleidung hergestelltes Fahrerhausoberteil, das leicht lösbar mit der mit Stahlblechplatten gepanzerten Fahrerkabine-Bodenwand verbunden ist.

Bei einer vereinfachten abgewandelten Ausführungsform kann nur die Frachtgutkabine als leicht vom Fahrgestell lösbares Fahrzeug-Aufbauteil aus Aluminiumbauteilen ausgebildet sein.

Die Aluminiumblech verkleidungen sind zweckmäßigerweise innenseitig durch Schaumstoffplatten wärmedämmend ausgebildet.

Dieses Herstellverfahren erlaubt die Verwendung des Chassis beliebiger moderner mittelgroßer Lastkraftwagen, beispielsweise des Typs Mercedes Benz 410 D, MB 100 oder eines Nissan Pickup. Derartige normale Lastkraftwagen mittlerer Größe werden in großen Stückzahlen hergestellt, sind entsprechend preiswert und zugleich immer auf dem neuesten Stand der Technik. Bei diesen Lastkraftwagen braucht nur der Frachtraum und das Fahrerhausoberteil entfernt und durch die beiden erfindungsgemäßen Fahrzeugaufbauteile ersetzt zu werden, wodurch ein den jeweiligen Wünschen nach Bauhöhe, Wendigkeit, Schnelligkeit u.a.m. entsprechendes gepanzertes Kraftfahrzeug für den Transport von Geld oder anderen Wertsachen herstellbar ist.

Die Verwendung von Aluminium als Baustoff für die Fahrzeugaufbauteile führt wegen der gegenüber Stahlblech besseren Korrosionsfestigkeit zu einer längeren Gebrauchszeit.

Die Nutzdauer eines derart ausgestalteten gepanzerten Kraftfahrzeugs wird auch noch durch kürzere Reparaturzeiten verlängert da das betreffende beschädigte Fahrzeugaufbauteil sehr rasch abgetrennt und durch ein neues unbeschädigtes Fahrzeugaufbauteil ersetzt werden kann.

Schließlich hat es der Kunde auch noch in der Hand, den auswechselbaren Aluminium-Fahrzeugaufbauteilen auch eine äußerlich unauffällige Form geben zu lassen, daß das Fahrzeug nicht auffällig als Werttransporter erkennbar ist.

## Patentansprüche

1. Gepanzertes Kraftfahrzeug für den Transport von Geld oder anderen Wertsachen, gekennzeichnet durch
- eine in Leichtbauweise aus Aluminiumrohrrahmen mit äußerer Aluminiumblechverkleidung hergestellte Frachtgutkabine,
- die leicht lösbar -beispielsweise mittels Schellen und Schrauben- mit dem Fahrgestell eines üblichen Lastkraftwagens verbunden ist und
- ein in Leichtbauweise aus Aluminiumrohrrahmen mit äußerer Aluminiumblechverkleidung hergestelltes Fahrerhausoberteil,
- das leicht lösbar mit der mit Stahlblechplatten gepanzerten Fahrerkabinen-Bodenwand verbunden ist.

2. Gepanzertes Kraftfahrzeug nach Anspruch 1,
dadurch gekennzeichnet, daß
nur die Frachtgutkabine als leicht vom Fahrgestell lösbares Fahrzeugaufbauteil aus Aluminiumbauteilen ausgebildet ist.

3. Gepanzertes Kraftfahrzeug nach Anspruch 1 oder Anspruch 2, dadurch gekennzeichnet, daß die Aluminiumblechverkleidungen innenseitig durch Schaumstoffplatten wärmedämmend ausgebildet sind.
